# EUROPÄISCHE PATENTSCHRIFT

(11) **EP 1 484 930 B1**
(45) Veröffentlichungstag und Bekanntmachung des Hinweises auf die Patenterteilung: **11.02.2015**
(21) Anmeldenummer: 04021690.5
(22) Anmeldetag: 16.10.1999
(51) Int. Cl.: H04W 4/12, H04W 4/18, H04W 4/14, H04W 4/20

(54) **Übertragungsrahmen und Funkeinheit für die Übertragung von Kurznachrichten mit verschiedenen Datenformaten**
Transmission frame and radio unit for the transmission of short messages with different data format
Trame de transmission et unité radio pour la transmission de messages courts avec différent format de données

(30) Priorität: 08.12.1998 DE 19856440
(43) Veröffentlichungstag der Anmeldung: 08.12.2004
(62) Teilanmeldung aus: 99959215.7
(73) Patentinhaber: IPCom GmbH & Co. KG, 82049 Pullach (DE)
(72) Erfinder: Hans, Martin, 31139 Hildesheim (DE); Kowalewski, Frank, 38228 Salzgitter (DE); Schulz, Holger, 14059 Berlin (DE); Fischer, Ralf, 31199 Diekholzen (DE); Schmidt, Gunnar, 38302 Wolfenbuettel (DE)
(74) Vertreter: 2s | ip Schramm Schneider Patentanwälte Rechtsanwälte

(56) Entgegenhaltungen:
- EP-A1- 1 138 163
- WO-A-97/08906
- SEH-JOON DOKKO ET AL: "Development of multimedia E-mail system providing an integrated message view" 28. April 1997 (1997-04-28), HIGH PERFORMANCE COMPUTING ON THE INFORMATION SUPERHIGHWAY, 1997. HPC ASIA '97 SEOUL, SOUTH KOREA 28 APRIL-2 MAY 1997, LOS ALAMITOS, CA, USA,IEEE COMPUT. SOC, US, PAGE(S) 494-498 , XP010224953 ISBN: 0-8186-7901-8 * Seite 495; Abbildung 1 * * Seite 497; Abbildung 6 *
- NOKIA: "BEDIENUNGSANLEITUNG NOKIA 7110" BEDIENUNGSANLEITUNG NOKIA 9000I COMMUNICATOR, Februar 1998 (1998-02), XP002431200
- OBST, WOLFGANG: "Nokia 9000i" INTERNET ARTICLE -PREISLISTE HANDYS, [Online] 4. Februar 1998 (1998-02-04), XP002431201 Gefunden im Internet: URL:http://groups.google.de/group/fido.ger .kommerz/browse_thread/thread/eb310237e530 baa7/97d975767a06bb6a?lnk=st&q=wolfgang+ob st+nokia+9000i&rnum=1&hl=de#97d975767a06bb 6a> [gefunden am 2007-04-20]
- BOSCH: "Generalised Structure for a Multimedia Messaging Service" ETSI STC SMG1+SMG4+SMG12 MULTIMEDIA TDOC, 3. Dezember 1998 (1998-12-03), XP002431202 Hanover
- NOKIA: "Multimedia Messaging Service (MMS)", SMG12, no. 98S98S565, 14 August 1998 (1998-08-14) , pages 1-2,

## Beschreibung

### Stand der Technik

Die Erfindung geht von einem Übertragungsrahmen und einem Telekommunikationsgerät mit einem Übertragungsrahmen nach der Gattung der unabhängigen Ansprüche aus.

Kurznachrichtendienste zur Übertragung von Kurznachrichten sind bereits bekannt. Die Kurznachrichtendienste dienen dazu, einem Teilnehmer eines Telekommunikationsnetzes eine Kurznachricht zu senden, ohne daß vorher eine Telekommunikationsverbindung zu diesem aufgebaut werden muß. Dies ist besonders in Mobilfunksystemen von Interesse, da dort Teilnehmer oftmals nicht erreichbar sind. Dabei werden eingehende Kurznachrichten von einem Netzbetreiber des Telekommunikationsnetzes gespeichert und zu einem späteren Zeitpunkt an den adressierten Teilnehmer übermittelt. Der Teilnehmer wird von dem Eintreffen einer für ihn bestimmten Kurznachricht informiert, so daß er diese vom Netzbetreiber herunterladen kann.

Beispiel für einen Kurznachrichtendienst ist der Short-Message-Service (SMS) nach dem GSM-Standard (Global System for Mobile Communications). Dieser Kurznachrichtendienst gibt einen Übertragungsrahmen für die Übertragung einer Kurznachricht mit bis zu 160 7-Bit ASCII-Textzeichen (American Standard Code for Information Interchange) vor. Eine Übertragung von längeren Texten ist mit Hilfe von verketteten Kurznachrichten möglich. Mit Hilfe dieses Kurznachrichtendienstes ist auch mit einfachen Mobilfunkendgeräten ein Erstellen und Lesen der Kurznachrichten möglich. Da gemäß dem GSM-Standard nur eine Textübertragung für die Kurznachrichten vorgesehen ist, müssten bei der Übertragung von binären Daten, wie Audiodaten, Bilddaten, oder dergleichen, diese in das Textformat umgewandelt und nach dem Empfang wieder in das Binärformat zurückgewandelt werden.

SEH-JOON DOKKO ET AL: "Development of multimedia E-mail system providing an integrated message view", 28. April 1997, HIGH PERFORMANCE COMPUTING ON THE INFORMATION SUPERHIGHWAY, 1997. HPC ASIA '97 SEOUL, SOUTH KOREA 28 APRIL-2 MAY 1997, LOS ALAMITOS, CA, USA, IEEE COMPUT. SOC, US, PAGE(S) 494-498, XP010224953 ISBN: 0-8186-7901-8 * Seite 495 ff., betrifft ein Multimedia-Email-System, bei welchem eine MIME-Nachricht mehrere Datenarten in einem einheitlichen ASCII-Datenformat umfasst.

BOSCH: "Generalized Structure for a Multimedia Messaging Service", ETSI STC SMG1+SMG4+SMG12 MULTIMEDIA TDOC, 3. Dezember 1998 (1998-12-03), XP002431202 Hanover, betrifft eine verallgemeinerte Struktur eines Multimedia-Messaging-Dienstes, bei welchem eine SMS und ein Multimedia-Container (MMC) vorgesehen sind. Der Multimedia-Container umfasst Daten mehrerer Datenarten. Die SMS enthält Informationen über den MMC.

NOKIA: "Multimedia Messaging Service (MMS)", SMG12, Nr. 98S565, 10.-14. August 1998, Seiten 1 und 2 betrifft einen MMS-Dienst, bei welchem Bilder, Audio/Video-Clips und andere Binärinformation in einer Store-and-forward-Weise transferiert werden.

### Vorteile der Erfindung

Der erfindungsgemäße Übertragungsrahmen und das erfindungsgemäße Telekommunikationsgerät mit den Merkmalen der unabhängigen Ansprüche haben demgegenüber den Vorteil, dass mindestens zwei Datenfelder vorgesehen sind, dass in den Datenfeldern Daten einer Kurznachricht abgelegt sind und dass in einem ersten Datenfeld Daten eines ersten Datenformats und in einem zweiten Datenfeld Daten eines vom ersten Datenformat verschiedenen zweiten Datenformats abgelegt sind. Auf diese Weise lässt sich eine Kurznachricht, die unterschiedliche Datenarten umfasst, in einem einzigen Übertragungsrahmen übertragen. Somit lassen sich unterschiedliche Medien, wie beispielsweise Textdaten, Audiodaten und Bilddaten auf einfache Weise in eine einzige Kurznachricht integrieren, so dass eine Multimedia-Kurznachricht gebildet werden kann.

Ein weiterer Vorteil besteht darin, dass der Übertragungsrahmen nicht in seiner Länge begrenzt ist, sondern dass beliebige Datenfelder aneinandergereiht im Übertragungsrahmen übertragen werden können.

Ein weiterer Vorteil besteht darin, daß durch die Aneinanderreihung der Datenfelder ein einfaches Trennen bzw. Herunterladen der Daten eines einzelnen Datenfeldes oder Mediums mit Text-, Audio- oder Bilddaten ermöglicht wird. Da damit nur der wirklich benötigte Teil der Kurznachricht vom Netzbetreiber des Telekommunikationsnetzes heruntergeladen werden muß, läßt sich Übertragungskapazität einsparen.

Durch die in den Unteransprüchen aufgeführten Maßnahmen sind vorteilhafte Weiterbildungen und Verbesserungen des im unabhängigen Anspruch 1 angegebenen Übertragungsrahmens möglich.

Besonders vorteilhaft ist es, daß in dem ersten Datenfeld eine erste Kennung vorgesehen ist, die den Aufbau und/oder den Inhalt der Kurznachricht kennzeichnet. Auf diese Weise kann ein Teilnehmer, an den die Kurznachricht adressiert ist, besonders einfach durch Übertragung lediglich des ersten Datenfeldes vom Netzbetreiber des Telekommunikationsnetzes zum adressierten Teilnehmer über den Aufbau und/oder den Inhalt der Kurznachricht informiert werden. Aufgrund dieser Information kann beim adressierten Teilnehmer dann entschieden werden, welche Teile oder Datenfelder der Kurznachricht er vom Netzbetreiber des Telekommunikationsnetzes herunterladen möchte.

Ein weiterer Vorteil besteht darin, daß das erste Datenfeld in seiner Größe auf einen vorgegebenen Wert beschränkt ist. Somit kann auch ein Teilnehmer mit beschränkter Aufnahmekapazität für den Empfang von Kurznachrichten über den Aufbau und/oder den Inhalt der gesamten Kurznachricht durch Übertragung des ersten Datenfeldes informiert werden.

Ein weiterer Vorteil besteht darin, daß die Gesamtlänge der Kurznachricht nicht begrenzt ist.

Vorteilhaft ist es auch, daß in mindestens zwei Datenfeldern jeweils eine datenfeldspezifische Kennung vorgesehen ist, die den Aufbau und/oder den Inhalt des entsprechenden Datenfeldes kennzeichnet. Auf diese Weise kann auch eine Mitteilung über den Aufbau und/oder den Inhalt der gesamten Kurznachricht durch Zusammenfassen aller datenfeldspezifischen Kennungen erzeugt und an den adressierten Teilnehmer gesendet werden, so daß das erste Datenfeld vor allem im Falle einer Größenbeschränkung nicht übermäßig durch Kennungsdaten gefüllt wird.

Durch die datenfeldspezifische Kennung kann der adressierte Teilnehmer beim Herunterladen des zugehörigen Datenfeldes vom Netzbetreiber noch genauer über dieses Datenfeld informiert werden und somit beispielsweise eine Wiedergabe der mit dem Datenfeld übertragenen Daten besser an seine Wiedergabemöglichkeiten anpassen.

Besonders vorteilhaft ist es, daß die im ersten Datenfeld abgelegten Daten in einem von allen Teilnehmern des Telekommunikationsnetzes lesbaren Datenformat vorliegen. Auf diese Weise sind Kurznachrichten zumindest teilweise an alle Teilnehmer des Telekommunikationsnetzes versendbar. Außerdem können alle Teilnehmer über für sie beim Netzbetreiber vorliegende Kurznachrichten zumindest informiert werden, auch wenn sie bestimmte Datenfelder der für sie bestimmten Kurznachricht nicht lesen können.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild für die Übertragung von Kurznachrichten in einem Telekommunikationsnetz, Figur 2 einen allgemeinen Aufbau eines Übertragungsrahmens und Figur 3 ein konkretes Beispiel für einen Aufbau eines Übertragungsrahmens.

### Beschreibung des Ausführungsbeispiels

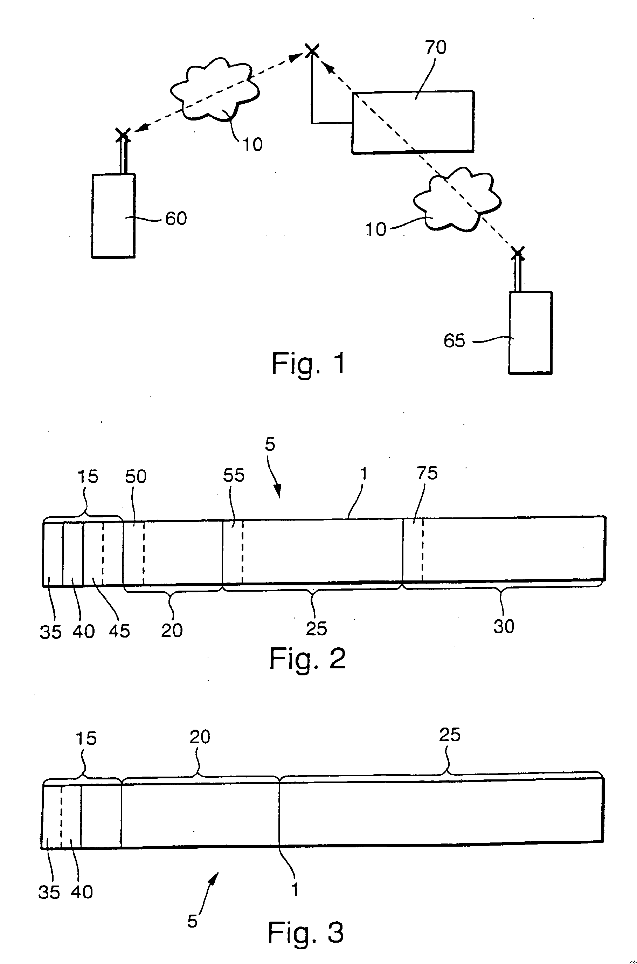

In Figur 1 kennzeichnet 60 einen ersten Teilnehmer und 65 einen zweiten Teilnehmer eines Telekommunikationsnetzes 10, das insbesondere als Funktelekommunikationsnetz, beispielsweise als Mobilfunknetz ausgebildet ist. Der erste Teilnehmer 60 und der zweite Teilnehmer 65 sind jeweils als Telekommunikationsgerät, insbesondere als Funkeinheit, beispielsweise als Mobilfunkgerät, als Betriebsfunkgerät, als Handfunkgerät, oder dergleichen ausgebildet. In Figur 1 ist außerdem ein Netzbetreiber 70 des Telekommunikationsnetzes 10 dargestellt, der ebenfalls als Telekommunikationsgerät, insbesondere als Funkeinheit ausgebildet sein kann.

Beim zweiten Teilnehmer 65 wird eine Kurznachricht 5 für den ersten Teilnehmer 60 erstellt und mit entsprechender Adressierung über das Telekommunikationsnetz 10 an den Netzbetreiber 70 abgestrahlt. Der Netzbetreiber 70 speichert die Kurznachricht 5 und sendet dem ersten Teilnehmer 60 eine Nachricht zu, wonach dieser über das Vorliegen einer an ihn adressierten Kurznachricht 5 informiert wird. Diese Nachricht kann dem ersten Teilnehmer 60 beispielsweise zugesandt werden, wenn der Netzbetreiber 70 eine Aktivierung des ersten Teilnehmers 60 feststellt. Fordert der erste Teilnehmer 60 nach Empfang der genannten Nachricht den Netzbetreiber 70 zur Übertragung der Kurznachricht 5 auf, so sendet der Netzbetreiber 70 an den ersten Teilnehmer 60 zunächst eine Mitteilung, die den ersten Teilnehmer 60 über Aufbau und/oder Inhalt der Kurznachricht 5 informiert. Der erste Teilnehmer 60 kann dann die Kurznachricht 5 teilweise oder vollständig vom Netzbetreiber 70 herunterladen, so daß die Kurznachricht 5 teilweise oder vollständig vom Netzbetreiber 70 zum ersten Teilnehmer 60 übertragen wird.

In Figur 2 ist der Aufbau einer solchen Kurznachricht 5 dargestellt. Die Kurznachricht 5 wird dabei in einem Übertragungsrahmen 1 vom zweiten Teilnehmer 65 zum Netzbetreiber 70 übertragen. Der Übertragungsrahmen 1 umfaßt ein erstes Datenfeld 15, ein zweites Datenfeld 20, gegebenenfalls ein drittes Datenfeld 25 und ein viertes Datenfeld 30. Das erste Datenfeld 15 umfaßt eine erste Kennung 35, die den Aufbau der Kurznachricht 5 kennzeichnet. Zusätzlich kann im ersten Datenfeld 15 eine zweite Kennung 40 vorgesehen sein, die den Inhalt der Kurznachricht 5 kennzeichnet. Die erste Kennung 35 und die zweite Kennung 40 können auch zu einer einzigen Kennung zusammengefaßt sein, die den Aufbau und/oder den Inhalt der Kurznachricht 5 kennzeichnet. Im ersten Datenfeld 15 sind außerdem Daten eines ersten Datenformats abgelegt. Im zweiten Datenfeld 20 sind Daten eines vom ersten Datenformat verschiedenen zweiten Datenformats abgelegt. In den gegebenenfalls vorhandenen weiteren Datenfelder 25, 30 sind ebenfalls Daten abgelegt, deren Datenformat vom Datenformat des ersten Datenfeldes 15 oder des zweiten Datenfeldes 20 verschieden sein kann, aber nicht muß. Sind mehr als zwei Datenfelder im Übertragungsrahmen 1 vorgesehen, so sind zumindest in zwei der Datenfelder Daten unterschiedlichen Formats abgelegt, wobei die Position dieser Datenfelder im Übertragungsrahmen 1 unerheblich ist.

Durch gestrichelte Linien in Figur 2 ist angedeutet, daß das erste Datenfeld 15 zusätzlich eine erste datenfeldspezifische Kennung 45 umfassen kann, die den Aufbau und/oder den Inhalt des ersten Datenfeldes 15 kennzeichnet. Entsprechend kann das zweite Datenfeld 20 eine zweite datenfeldspezifische Kennung 50 umfassen, die den Aufbau und/oder den Inhalt des zweiten Datenfeldes 20 kennzeichnet. Entsprechend kann das dritte Datenfeld 25 eine dritte datenfeldspezifische Kennung 55 umfassen, die den Aufbau und/oder den Inhalt des dritten Datenfeldes 25 kennzeichnet und das vierte Datenfeld 30 kann eine vierte datenfeldspezifische Kennung 75 umfassen, die den Aufbau und/oder den Inhalt des vierten Datenfeldes 30 kennzeichnet.

Die erste Kennung 35 kann Angaben über die Anzahl der Datenfelder 15, 20, 25, 30 in der Kurznachricht 5 umfassen. Zusätzlich oder alternativ kann die erste Kennung 35 Angaben über die Datenformate der in den Datenfeldern 15, 20, 25, 30 abgelegten Daten umfassen. Zusätzlich oder alternativ können auch Angaben über die Größe der Datenfelder 15, 20, 25, 30 in der ersten Kennung 35 enthalten sein. Die zweite Kennung 40 kann dann Angaben über die Datenart der in den Datenfeldern 15, 20, 25, 30 abgelegten Daten umfassen. So kann die zweite Kennung 40 beispielsweise Angaben darüber enthalten, ob in einem Datenfeld Audiodaten oder Bilddaten abgelegt sind.

Es kann nun vorgesehen sein, daß der Netzbetreiber 70 auf Anforderung des ersten Teilnehmers 60 das erste Datenfeld 15 mit der ersten Kennung 35 und der zweiten Kennung 40 an den ersten Teilnehmer 60 übermittelt, so daß der erste Teilnehmer 60 aufgrund der in der ersten Kennung 35 und der zweiten Kennung 40 übertragenen Informationen über den Aufbau und/oder den Inhalt der Kurznachricht 5 prüfen kann, welche Datenfelder der Kurznachricht 5 er aufgrund seiner Funktionalität vom Netzbetreiber 70 herunterladen und/oder wiedergeben kann. Außerdem kann beim ersten Teilnehmer 60 eine Entscheidung darüber getroffen werden, welche der lesbaren Datenfelder der Kurznachricht 5 überhaupt vom Netzbetreiber 70 heruntergeladen werden sollen, wenn nicht alle lesbaren Datenfelder der Kurznachricht 5 beim ersten Teilnehmer 60 von Interesse sind und Übertragungskapazität eingespart werden soll. Wenn nach der Aufforderung des ersten Teilnehmers 60 das gesamte erste Datenfeld 15 mit der ersten Kennung 35 und der zweiten Kennung 40 an den ersten Teilnehmer 60 übertragen werden soll, so sollte möglichst gewährleistet sein, daß die im ersten Datenfeld 15 abgelegten Daten in einem von allen Teilnehmern des Telekommunikationsnetzes 10 lesbaren Datenformat vorliegen. Dies ist insbesondere dann gegeben, wenn die im ersten Datenfeld 15 abgelegten Daten zusammen mit den Daten in der ersten Kennung 35 und in der zweiten Kennung 40 in einem Textformat vorliegen, wobei sich beispielsweise das SMS-Format (Short-Message-Service) gemäß dem GSM-Standard (Global System for Mobile Communications) anbietet, da es in einem nach den Anforderungen des GSM-Systems ausgebildeten Telekommunikationsnetz von den nach dem GSM-Standard ausgebildeten Teilnehmern bzw. Mobilfunkgeräten dieses Telekommunikationsnetzes lesbar ist. Dabei kann das erste Datenfeld 15 dem für den SMS-Kurznachrichtendienst nach dem GSM-Standard bisher schon vorgeschriebenen Datenfeld entsprechen und in seiner Größe auf die 160 7-Bit ASCII-Textzeichen (American Standard Code for Information Interchange) beschränkt sein. Die anderen Datenfelder 20, 25, 30 müssen in ihrer Größe nicht beschränkt sein.

Ein weiteres Datenformat für das erste Datenfeld 15, das alternativ zum Textformat ebenfalls von allen Teilnehmern des Telekommunikationsnetzes 10 lesbar ist, ist die Binärkodierung von Verweisen auf Einträge in solchen Tabellen, die bekannte Datenformate enthalten und die allen Teilnehmern des Telekommunikationsnetzes 10 bekannt sind.

Zumindest ein Teil der im ersten Datenfeld 15 abgelegten Daten, beispielsweise die Daten der ersten Kennung 35 und/oder die Daten der zweiten Kennung 40, bestehen dann aus binärkodierten Werten, die die Indizes der Tabelleneinträge darstellen. In den Tabellen sind bekannte Datenarten und/oder Datenformate, zum Beispiel Audio- und/oder Videoformate, diesen Indizes zugeordnet.

Auch die datenfeldspezifischen Kennungen 45, 50, 55, 75 können Angaben über die Datenformate im jeweils zugehörigen Datenfeld 15, 20, 25, 30 und/oder über die Größe des jeweils zugehörigen Datenfeldes 15, 20, 25, 30 und/oder über die Datenart in dem jeweiligen Datenfeld 15, 20, 25, 30 umfassen. Wenn vereinbart ist, daß im ersten Datenfeld 15 die Daten gemäß dem GSM-SMS-Textformat vorliegen und dieses Datenfeld beispielsweise auf 160 7-Bit ASCII-Textzeichen begrenzt ist, so kann die erste datenspezifische Kennung 45 auch entfallen. Es kann vorgesehen sein, daß in jedem Datenfeld 15, 20, 25, 30 nur Daten eines einzigen Datenformats abgelegt sind. Es kann aber auch vorgesehen sein, daß zumindest in einem der Datenfelder Daten mehrerer Datenformate abgelegt sind, insbesondere im zweiten Datenfeld 20 und/oder gegebenenfalls in einem oder mehreren weiteren Datenfeldern 25, 30. Es kann natürlich auch vorgesehen sein, daß die Kurznachricht 5 mehr als die vier in Figur 2 dargestellten Datenfelder umfaßt.

Es kann auch vorgesehen sein, daß die Mitteilung des Netzbetreibers 70 über Aufbau und/oder Inhalt der Kurznachricht 5 an den ersten Teilnehmer 60 nach dessen Aufforderung vom Netzbetreiber 70 durch Auswertung der datenfeldspezifischen Kennungen 45, 50, 55, 75 erstellt und anschließend an den ersten Teilnehmer 60 gesendet wird, so daß in diesem Fall die erste Kennung 35 und die zweite Kennung 40 nicht erforderlich sind und auch das erste Datenfeld 15 nicht an den ersten Teilnehmer 60 versendet werden muß. Die auf diese Weise erzeugte Mitteilung über Aufbau und/oder Inhalt der Kurznachricht 5 kann jedoch ebenfalls in einem von allen Teilnehmern des Telekommunikationsnetzes 10 lesbaren Datenformat an den ersten Teilnehmer 60 versendet werden, wozu insbesondere wieder das GSM-SMS-Textformat unter Verwendung eines Datenfeldes mit beispielsweise 160 7-Bit ASCII-Textzeichen vorgesehen sein kann.

Anhand von Figur 3 wird nun ein konkretes Beispiel eines Übertragungsrahmens 1 für eine Kurznachricht 5 beschrieben. Die Kurznachricht 5 ist dabei als Multimedia-Kurznachricht ausgebildet. Gleiche Bezugszeichen in Figur 3 kennzeichnen gleiche Elemente wie in Figur 2. Dabei sind gemäß Figur 3 im Übertragungsrahmen 1 das erste Datenfeld 15, das zweite Datenfeld 20 und das dritte Datenfeld 25 vorgesehen. Datenfeldspezifische Kennungen in den einzelnen Datenfeldern 15, 20, 25 sind nicht vorgesehen. Das erste Datenfeld 15 umfaßt dabei Textdaten im ASCII-Textformat, das zweite Datenfeld 20 umfaßt Audiodaten beispielsweise gemäß dem WAV-Format (Wave) und das dritte Datenfeld 25 umfaßt Bilddaten, beispielsweise gemäß dem GIF-Format (Graphic Interchange Format). Das erste Datenfeld 15 mit den Textdaten ist entsprechend dem GSM-SMS-Kurznachrichtendienst textformatiert. Durch eine gestrichelte Linie zwischen der ersten Kennung 35 und der zweiten Kennung 40 ist in Figur 3 angedeutet, daß die erste Kennung 35 und die zweite Kennung 40 zu einer gemeinsamen Kennung zusammengefaßt sein können. Eine solche gemeinsame Kennung 35, 40 gibt die Zahl der Datenfelder 15, 20, 25 und den Inhalt sowie die Größe des zweiten Datenfeldes 20 und des dritten Datenfeldes 25 an. So könnte die gemeinsame Kennung 35, 40 folgendermaßen aussehen:
"Multipart/2/Audio/7654/Image/12345"

Diese gemeinsame Kennung 35, 40 sagt aus, daß es sich um eine Kurznachricht aus mehreren Datenfeldern gemäß dem Stichwort "Multipart" handelt. Die Ziffer "2" gibt an, daß neben dem immer vorhandenen ersten Datenfeld 15 mit den Textdaten und der Länge von 160 7-Bit ASCII-Textzeichen zwei weitere Datenfelder 20, 25 im Übertragungsrahmen 1 der Kurznachricht 5 vorliegen. Als erste Datenart in der gemeinsamen Kennung 35, 40 ist dabei "Audio" genannt, so daß aus der gemeinsamen Kennung 35, 40 hervorgeht, daß es sich bei den im zweiten Datenfeld 20 abgelegten Daten um Audiodaten handelt. Als zweites wird die Datenart "Image"in der gemeinsamen Kennung 35, 40 genannt, so daß aus der gemeinsamen Kennung 35, 40 hervorgeht, daß es sich bei den im dritten Datenfeld 25 abgelegten Daten um Bilddaten handelt. Anschließend an die Datenart ist in der gemeinsamen Kennung 35, 40 jeweils die Größe des zugehörigen Datenfeldes 20, 25 angegeben, so daß aus der gemeinsamen Kennung 35, 40 eine Länge einer im zweiten Datenfeld 20 übertragenen Audiodatei mit den Audiodaten von 7654 byte und einer im dritten Datenfeld 25 übertragenen Bilddatei mit den Bilddaten von 12345 byte hervorgeht. Für das erste Datenfeld 15 sind in der gemeinsamen Kennung 35, 40 keine Angaben erforderlich, da es sich hierbei in dem beschriebenen Beispiel immer um Textdaten handelt, die zum GSM-SMS-Textformat kompatibel und in ihrer Anzahl auf 160 7-Bit ASCII-Textzeichen beschränkt sind. Es kann zusätzlich vorgesehen sein, daß die gemeinsame Kennung 35, 40 auch das Datenformat für die Daten im zweiten Datenfeld 20 und im dritten Datenfeld 25 angibt. Für die Audiodaten im zweiten Datenfeld 20 könnte dann in der gemeinsamen Kennung 35, 40 als Datenformat das WAV-Format angegeben werden. Für die Bilddaten im dritten Datenfeld 25 könnte in der gemeinsamen Kennung 35, 40 als Datenformat das GIF-Format angegeben werden. Möglich ist aber auch, daß die Angaben "Audio" und "Image" der oben angegebenen gemeinsamen Kennung 35, 40 zugleich den Inhalt und auch das Format der in den entsprechenden Datenfeldern 20, 25 abgelegten Daten beschreiben, wobei dann beispielsweise vorausgesetzt ist, daß Audiodaten immer in einem vorgegebenen Format, beispielsweise dem WAV-Format und Bilddaten ebenfalls immer in einem vorgegebenen Format, beispielsweise dem GIF-Format im entsprechenden Datenfeld des Übertragungsrahmens 1 vorliegen.

Wie beschrieben ist es auch möglich, die Datenart und/oder das Datenformat über allen Teilnehmern des Telekommunikationsnetzes 10 bekannte Tabellen zu kodieren, beispielsweise mittels eines Binärkodes. In einer ersten Tabelle für Datenarten kann beispielsweise die Datenart "Textdaten" der Ziffer "1", die Datenart "Audiodaten" der Ziffer "2", die Datenart "Bilddaten" der Ziffer "3" und die Datenart "Videodaten" der Ziffer "4" zugeordnet sein, wobei die Ziffern entsprechend binärkodiert sein können. In einer zweiten Tabelle für Datenformate der Datenart "Audiodaten" kann beispielsweise das Datenformat "WAV" der Ziffer "1", das Datenformat "G.723" der Ziffer "2", das Datenformat "G.728" der Ziffer "3", das Datenformat "MPEG-Audio" (Motion Picture Expert Group) der Ziffer "4" und das Datenformat "AMR" (Adaptive Multi Rate) der Ziffer "5" zugeordnet sein, wobei diese Ziffern wiederum entsprechend binärkodiert sein können. In einer dritten Tabelle für Datenformate der Datenart "Bilddaten" kann beispielsweise das Datenformat "GIF" der Ziffer "1", das Datenformat "JPEG" (Joint Picture Expert Group) der Ziffer "2" und das Datenformat "BMP" (Bitmap) der Ziffer "3" zugeordnet sein, wobei diese Ziffern wiederum entsprechend binärkodiert sein können.

Die gemeinsame Kennung 35, 40 könnte dann wie folgt aussehen:
2/2/1/3/1

Diese gemeinsame Kennung 35, 40 sagt dasselbe aus, wie die oben im Textformat beschriebene. Dabei steht die erste Ziffer "2" der gemeinsamen Kennung 35, 40 für die Anzahl der zusätzlich zum ersten Datenfeld 15 vorhandenen Datenfelder im Übertragungsrahmen 1 der Kurznachricht 5. Die zweite Ziffer "2" der gemeinsamen Kennung 35, 40 verweist innerhalb der ersten Tabelle für Datenarten auf die Datenart "Audiodaten" und sagt somit aus, daß im zweiten Datenfeld 20 Audiodaten abgelegt sind. Die dritte Ziffer "1" der gemeinsamen Kennung 35, 40 verweist innerhalb der zweiten Tabelle für Datenformate der Datenart "Audiodaten" auf das "WAV"-Datenformat und sagt aus, daß die im zweiten Datenfeld 20 abgelegten Daten im "WAV"-Datenformat vorliegen. Die vierte Ziffer "3" der gemeinsamen Kennung 35, 40 verweist innerhalb der ersten Tabelle für Datenarten auf die Datenart "Bilddaten" und sagt somit aus, daß im dritten Datenfeld 25 Bilddaten abgelegt sind. Die fünfte Ziffer "1" der gemeinsamen Kennung 35, 40 verweist innerhalb der dritten Tabelle für Datenformate der Datenart "Bilddaten" auf das "GIF"-Datenformat und sagt aus, daß die im dritten Datenfeld 25 abgelegten Daten im "GIF"-Datenformat vorliegen.

Aufgrund der an den ersten Teilnehmer 60 übermittelten gemeinsamen Kennung 35, 40 kann bei diesem entschieden werden, ob ein Herunterladen des zweiten Datenfeldes 20 und/oder des dritten Datenfeldes 25 vom Netzbetreiber 70 überhaupt sinnvoll oder gewollt ist. Wenn der erste Teilnehmer 60 nicht audiofähig ist, d.h. keine Verarbeitungs- oder Wiedergabemöglichkeit für Audiodaten besitzt, so ist ein Herunterladen der Audiodaten aus dem zweiten Datenfeld 20 vom Netzbetreiber 70 nicht sinnvoll. Wenn der erste Teilnehmer 60 nicht bildfähig ist, d.h. keine Verarbeitung oder Wiedergabe von Bilddaten beim ersten Teilnehmer 60 möglich ist, so ist ein Herunterladen von Bilddaten aus dem dritten Datenfeld 25 vom Netzbetreiber 70 ebenfalls nicht sinnvoll.

Zur Auswahl der vom Netzbetreiber 70 herunterzuladenden Datenfelder des Übertragungsrahmens 1 der Kurznachricht 5 kann es vorgesehen sein, die gemeinsame Kennung 35, 40 an einer Anzeigevorrichtung des ersten Teilnehmers 60 anzuzeigen.

Die Kurznachricht 5 könnte auch einen Übertragungsrahmen 1 aus genau zwei Datenfeldern 15, 20 umfassen, wobei im ersten Datenfeld 15 wie beschrieben die Textdaten mit der gemeinsamen Kennung 35, 40 vorliegen und im zweiten Datenfeld 20 mehrere Datenarten oder Medien zusammengefaßt sind. Es kann aber auch vorgesehen sein, daß N in der Kurznachricht 5 zu übertragende Datenarten oder Medien auf N bzw. N+1 Datenfelder im Übertragungsrahmen 1 der Kurznachricht 5 verteilt werden. Der erste Teilnehmer 60 kann alle Datenfelder der Kurznachricht 5 einzeln oder zusammen vom Netzbetreiber 70 herunterladen.

Beim ersten Teilnehmer 60 kann auch bereits eine Auswertung der übertragenen gemeinsamen Kennung 35, 40 erfolgen, so daß ihre Anzeige an der Anzeigevorrichtung des ersten Teilnehmers 60 bereits angibt, welche Datenfelder der Kurznachricht 5 überhaupt vom Netzbetreiber 70 heruntergeladen werden können aufgrund der Funktionalität des ersten Teilnehmers 60.

Der zweite Teilnehmer 65 erzeugt eine Kurznachricht 5 im beschriebenen Übertragungsrahmen 1. Die Erzeugung eines Übertragungsrahmens 1 beim zweiten Teilnehmer 65 kann dabei einfach durch Aneinanderfügen der einzelnen Datenfelder 15, 20, 25, 30 gegebenenfalls unter Hinzufügen von jeweils einer der datenfeldspezifischen Kennungen 45, 50, 55, 75 erfolgen. Der Netzbetreiber 70 wiederum empfängt und speichert Kurznachrichten 5 im beschriebenen Übertragungsrahmen 1. Bei entsprechender Funktionalität des ersten Teilnehmers 60 kann es vorgesehen sein, den Übertragungsrahmen 1 vollständig vom Netzbetreiber 70 herunterzuladen und zum ersten Teilnehmer 60 zu übertragen. In diesem Fall empfängt der erste Teilnehmer 60 die Kurznachricht 5 im beschriebenen Übertragungsrahmen 1, speichert sie gegebenenfalls ab und/oder gibt sie optisch und/oder akustisch wieder. Der erste Teilnehmer 60 empfängt zumindest ein einzelnes Datenfeld des Übertragungsrahmens 1, speichert es gegebenenfalls ab und/oder gibt es optisch und/oder akustisch wieder. Eine Auswertung empfangener Datenfelder 15, 20, 25, 30 beim Netzbetreiber 70 und beim ersten Teilnehmer 60 kann beispielsweise aufgrund der datenfeldspezifischen Kennungen 45, 50, 55, 75 erfolgen, falls diese mit den zugehörigen Datenfeldern 15, 20, 25, 30 übertragen werden oder aufgrund der gegebenenfalls übertragenen ersten Kennung 35 und/oder zweiten Kennung 40.

Der erfindungsgemäße Übertragungsrahmen 1 ist nicht auf die Verwendung in einem Funktelekommunikationsnetz beschränkt, sondern kann auch in einem drahtgebundenen Telekommunikationsnetz 10 zur Anwendung kommen, wobei dann auch die Teilnehmer 60, 65 und der Netzbetreiber 70 drahtgebunden sind. Es kann auch vorgesehen sein, daß einer der beiden Teilnehmer 60, 65 über ein drahtgebundenes Telekommunikationsnetz 10 und der andere der beiden Teilnehmer 60, 65 über ein drahtloses Telekommunikationsnetz 10 mit dem Netzbetreiber 70 in Verbindung steht, so daß der Übertragungsrahmen 1 sowohl für die Übertragung von Kurznachrichten 5 in dem drahtgebundenen als auch in dem drahtlosen Telekommunikationsnetz 10 geeignet ist.

## Patentansprüche

1. Übertragungsrahmen (1) für die Übertragung von Kurznachrichten (5) in einem Telekommunikationsnetz (10), insbesondere in einem Funktelekommunikationsnetz,
wobei mindestens zwei Datenfelder (15, 20, 25, 30) vorgesehen sind,
wobei die Datenfelder (15, 20, 25, 30) aneinandergereiht sind,
wobei in den Datenfeldern (15, 20, 25, 30) Daten einer Kurznachricht (5) abgelegt sind, wobei in einem ersten Datenfeld (15) Daten eines ersten Datenformats und in einem zweiten Datenfeld (20) Daten eines vom ersten Datenformat verschiedenen zweiten Datenformats abgelegt sind,
wobei in jedem Datenfeld (15, 20, 25, 30) nur Daten eines einzigen Datenformats abgelegt sind,
wobei in dem ersten Datenfeld (15) eine erste Kennung (35) vorgesehen ist, die den Aufbau der Kurznachricht (5) kennzeichnet,
wobei in dem ersten Datenfeld (15) eine zweite Kennung (40) vorgesehen ist, die den Inhalt der Kurznachricht (5) kennzeichnet,
wobei die Daten der ersten Kennung (35) und / oder der zweiten Kennung (40) aus binärcodierten Verweisen auf Tabellen bestehen, die Datenformate und / oder Datenarten enthalten und allen Teilnehmern des Telekommunikationsnetzes (10) bekannt sind, und wobei in mindestens zwei Datenfeldern (15, 20, 25, 30) jeweils eine datenfeldspezifische Kennung (45, 50, 55, 75) vorgesehen ist, die den Aufbau und/oder den Inhalt des entsprechenden Datenfeldes (15, 20, 25, 30) kennzeichnet.

2. Übertragungsrahmen (1) nach Anspruch 1, **dadurch gekennzeichnet, dass** die erste Kennung (35) Angaben über die Anzahl der Datenfelder (15, 20, 25, 30) und/oder über die Datenformate in den Datenfeldern (15, 20, 25, 30) und/oder über die Größe der Datenfelder (15, 20, 25, 30) umfasst.

3. Übertragungsrahmen (1) nach Anspruch 1 bis 2, **dadurch gekennzeichnet, dass** die zweite Kennung (40) Angaben über die Datenart, wie insbesondere Audio- oder Bilddaten, der in den Datenfeldern (15, 20, 25, 30) abgelegten Daten umfasst.

4. Übertragungsrahmen (1) nach einem der vorherigen Ansprüche, **dadurch gekennzeichnet, dass** nur das erste Datenfeld (15) in seiner Größe auf einen vorgegebenen Wert beschränkt ist.

5. Übertragungsrahmen (1) nach einem der vorherigen Ansprüche, **dadurch gekennzeichnet, dass** die im ersten Datenfeld (15) abgelegten Daten in einem von allen Teilnehmern des Telekommunikationsnetzes (10) lesbaren Datenformat vorliegen.

6. Übertragungsrahmen (1) nach einem der vorherigen Ansprüche, **dadurch gekennzeichnet, dass** die im ersten Datenfeld (15) abgelegten Daten in einem Textformat, insbesondere gemäß dem GSM-SMS-Format, vorliegen.

7. Telekommunikationsgerät (60, 65, 70), insbesondere Funkeinheit, mit Mitteln zur Erzeugung eines Übertragungsrahmens (1) gemäß Anspruch 1.

## Claims

1. Transmission frame (1) for transmitting short messages (5) in a telecommunication network (10), in particular in a radio telecommunication network, at least two data fields (15, 20, 25, 30) being provided, the data fields (15, 20, 25, 30) being strung together, the data fields (15, 20, 25, 30) storing data for a short message (5), a first data field (15) storing data in a first data format and a second data field (20) storing data in a second data format which differs from the first data format, each data field (15, 20, 25, 30) storing any data in a single data format, the first data field (15) containing a first identifier (35) which characterizes the structure of the short message (5), the first data field (15) contains a second identifier (40) which characterizes the content of the short message (5), the data of the first identifier (35) and/or of the second identifier (40) consisting of binary-coded references to tables which contain data formats and/or data types and are known to all subscribers in the telecommunication network (10), and at least two data fields (15, 20, 25, 30) respectively containing a data-field-specific identifier (45, 50, 55, 75) which characterizes the structure and/or the content of the corresponding data field (15, 20, 25, 30).

2. Transmission frame (1) according to Claim 1, **characterized in that** the first identifier (35) comprises details about the number of data fields (15, 20, 25, 30) and/or about the data formats in the data fields (15, 20, 25, 30) and/or about the size of the data fields (15, 20, 25, 30).

3. Transmission frame (1) according to Claims 1 and 2, **characterized in that** the second identifier (40) comprises details about the data type, such as audio data or image data, in particular, of the data stored in the data fields (15, 20, 25, 30).

4. Transmission frame (1) according to one of the preceding claims, **characterized in that** only the first data field (15) is limited in size to a prescribed value.

5. Transmission frame (1) according to one of the preceding claims, **characterized in that** the data stored in the first data field (15) are present in a data format which can be read by all subscribers in the telecommunication network (10).

6. Transmission frame (1) according to one of the preceding claims, **characterized in that** the data stored in the first data field (15) are present in a text format, particularly based on the GSM-SMS format.

7. Telecommunication appliance (60, 65, 70), in particular a radio unit, having means for producing a transmission frame (1) according to Claim 1.

## Revendications

1. Trame de transmission (1) permettant la transmission de courts messages (5) dans un réseau de télécommunication (10), en particulier dans un réseau de télécommunication radio,
la trame présentant au moins deux champs de données (15, 20, 25, 30),
les champs de données (15, 20, 25, 30) étant rangés les uns derrière les autres,
des données d'un court message (5) étant placées dans les champs de données (15, 20, 25, 30),
des données d'un premier format de données étant placées dans un premier champ de données (15) et des données d'un deuxième format de données, différent du premier format de données, étant placées dans un deuxième champ de données (20),
seules des données d'un seul format de données de données étant placées dans chaque champ de données (15, 20, 25, 30),
une première caractéristique (35) qui caractérise la structure du court message (5) étant prévue dans le premier champ de données (15),
une deuxième caractéristique (40) qui caractérise le contenu du court message (5) étant prévue dans le premier champ de données (15),
les données de la première caractéristique (35) et/ou de la deuxième caractéristique (40) étant constituées d'un renvoi à codage binaire à des tableaux qui contiennent les formats de données et/ou les types de données et qui sont connus à tous les participants au réseau de télécommunication (10) et
une caractéristique (45, 50, 55, 75) spécifique aux champs de données étant prévue dans au moins deux champs de données (15, 20, 25, 30) pour caractériser la structure et/ou le contenu du champ de données (15, 20, 25, 30) correspondant.

2. Trame de transmission (1) selon la revendication 1, **caractérisée en ce que** la première caractéristique (35) contient des données concernant le nombre des champs de données (15, 20, 25, 30), et/ou les formats de données des champs de données (15, 20, 25, 30) et/ou la taille des champs de données (15, 20, 25, 30).

3. Trame de transmission (1) selon les revendications 1 ou 2, **caractérisée en ce que** la deuxième caractéristique (40) comporte des données concernant le type de données, par exemple notamment des données audio ou des données d'image des données placées dans les champs de données (15, 20, 25, 30).

4. Trame de transmission (1) selon l'une des revendications précédentes, **caractérisée en ce que** seul le premier champ de données (15) a une taille limitée à une valeur prédéterminée.

5. Trame de transmission (1) selon l'une des revendications précédentes, **caractérisée en ce que** les données placées dans le premier champ de données (15) présentent un format de données lisible par tous les participants du réseau de télécommunication (10).

6. Trame de transmission (1) selon l'une des revendications précédentes, **caractérisée en ce que** les données placées dans le premier champ de données (15) présentent un format de texte, en particulier le format GSM-SMS.

7. Appareil de télécommunication (60, 65, 70), en particulier unité radio, équipé de moyens de formation d'une trame de transmission (1) selon la revendication 1.
